# FASCICULE DE BREVET EUROPEEN

(11) **EP 3 829 916 B1**
(45) Date de publication et mention de la délivrance du brevet: **16.08.2023**
(21) Numéro de dépôt: 19737103.2
(22) Date de dépôt: 09.07.2019
(51) Int. Cl.: B60K 35/00, G02B 27/01

(54) **AFFICHEUR AVEC CAPTEUR DE LUMIÈRE**
ANZEIGE MIT LICHTSENSOR
DISPLAY WITH LIGHT SENSOR

(30) Priorité: 30.07.2018 FR 1857111
(43) Date de publication de la demande: 09.06.2021
(73) Titulaire: Valeo Comfort and Driving Assistance, 94000 Créteil (FR)
(72) Inventeur: GRANDCLERC, Francois, 94046 Créteil CEDEX (FR); DIVINE, Armand, 94046 Créteil CEDEX (FR); MERMILLOD, Pierre, 94046 Créteil CEDEX (FR); KLECKNER, Alexis, 94046 Créteil CEDEX (FR); LE MOUNIER, Florian, 94046 Créteil CEDEX (FR); HUSSON, Arnaud, 94046 Créteil CEDEX (FR)
(74) Mandataire: Delplanque, Arnaud
(86) Numéro de dépôt international: PCT/EP2019/068456
(87) Numéro de publication internationale: WO 2020/025268

(56) Documents cités:
- EP-A1- 2 833 194
- EP-A1- 2 849 175
- WO-A1-2014/208438
- WO-A1-2017/186745
- JP-A- 2004 351 943
- JP-A- 2011 223 238
- US-A1- 2006 208 166

## Description

### DOMAINE TECHNIQUE AUQUEL SE RAPPORTE L'INVENTION

La présente invention concerne un afficheur, notamment un afficheur tête haute.

Elle concerne plus particulièrement un afficheur comprenant :
- un boîtier,
- un guide de lumière situé à l'intérieur du boîtier de l'afficheur, comportant une face d'entrée et une face de sortie opposées, reliées entre elles par une paroi latérale, ledit guide de lumière étant conformé pour, d'une part, collecter au niveau de sa face d'entrée un rayonnement lumineux provenant de l'extérieur du boîtier de l'afficheur, et, d'autre part, guider ledit rayonnement lumineux jusqu'à sa face de sortie,
- un capteur de lumière, disposé à l'intérieur dudit boîtier, derrière la face de sortie du guide de lumière, adapté à délivrer un signal représentatif d'une intensité lumineuse qu'il reçoit,
- une unité de génération d'image adaptée à générer au moins une image.

L'invention trouve une application particulièrement intéressante en tant qu'afficheur tête haute dans un véhicule automobile.

### ARRIERE-PLAN TECHNOLOGIQUE

Pour le conducteur d'un véhicule automobile, il est particulièrement confortable de visualiser des informations relatives au fonctionnement du véhicule, à l'état du trafic, ou autres, sans avoir à détourner le regard de la route faisant face au véhicule.

Du document WO 2017/186745 A1 il est connu dans ce but d'équiper un véhicule automobile avec un afficheur dit « afficheur tête haute » dans lequel il est prévu une unité de génération d'image pour générer une image virtuelle comportant les informations à afficher et un ensemble optique de projection pour projeter l'image générée en direction d'une lame partiellement transparente, située devant le conducteur, pour superposer visuellement l'image virtuelle générée à l'environnement faisant face au véhicule.

Afin que les informations ainsi affichées soient suffisamment lumineuses pour être correctement visualisées par le conducteur, sans pour autant risquer de l'éblouir, il est nécessaire d'adapter la luminosité de l'image virtuelle à la luminosité ambiante de l'environnement, qui varie fortement entre une conduite de jour et une conduite de nuit ou dans un tunnel.

Il est connu d'utiliser à cet effet un afficheur tel que décrit en préliminaire, dans lequel le capteur de lumière est disposé à l'intérieur du boîtier de l'afficheur, à l'arrière du guide de lumière.

Un tel afficheur, conçu pour adapter la luminosité de l'image virtuelle en fonction de la luminosité ambiante tient compte de la luminosité de l'ensemble de l'environnement à l'avant du véhicule automobile, et pas seulement de la luminosité d'une zone réduite de l'environnement, située autour de l'image virtuelle, de sorte que la luminosité de l'image virtuelle affichée par un tel afficheur peut malgré tout être inadaptée.

### OBJET DE L'INVENTION

Afin de remédier à l'inconvénient précité de l'état de la technique, la présente invention propose un afficheur conçu pour adapter la luminosité de l'image virtuelle à projeter, à la luminosité de l'environnement proche auquel elle se superpose.

Plus particulièrement, on propose selon la revendiction 1 un afficheur tel que décrit en introduction, dans lequel la paroi latérale du guide de lumière de l'afficheur est conformée pour qu'au moins un rayonnement lumineux parasite entrant dans le guide de lumière depuis une zone angulaire s'étendant au-delà d'une zone d'intérêt ressorte dudit guide de lumière sans atteindre la face de sortie du guide de lumière.

Ainsi, le guide de lumière élimine les rayonnements lumineux issus d'une région trop éloignée de la zone dans laquelle l'image virtuelle est projetée, de manière à ce qu'ils ne faussent pas l'adaptation de la luminosité de l'image virtuelle à projeter.

D'autres caractéristiques non limitatives et avantageuses de l'afficheur conforme à l'invention, prises individuellement ou selon toutes les combinaisons techniquement possibles, sont les suivantes :
- la luminosité de l'image générée par l'unité de génération d'image est commandée en fonction du signal délivré par le capteur de lumière ;
- il est prévu un ensemble optique de projection adapté à transmettre l'image générée par l'unité de génération d'image en direction d'une lame partiellement transparente, distincte dudit guide de lumière, de manière à former une image virtuelle dans le champ de vision d'un utilisateur ;

- la zone d'intérêt est située approximativement dans la direction dans laquelle est formée ladite image virtuelle ;
- la paroi latérale du guide de lumière comporte au moins une surface inclinée à travers laquelle est transmis le rayonnement lumineux parasite jusqu'à l'extérieur du guide de lumière ;
- la surface inclinée est orientée en direction de la face d'entrée du guide de lumière ;
- la paroi latérale du guide de lumière est globalement symétrique par rapport à un plan vertical s'étendant entre la face d'entrée et la face de sortie du guide de lumière ;
- le guide de lumière est globalement conique ;
- la face d'entrée du guide de lumière est formée par un dioptre courbé.

Selon une première configuration de l'afficheur, la surface inclinée de la paroi latérale est formée par au moins une facette plane.

Dans cette première configuration, il est aussi envisagé que la paroi latérale du guide de lumière comporte une pluralité de facettes le long d'un axe principal d'extension du guide de lumière, deux facettes adjacentes le long dudit axe principal d'extension étant au moins quasiment parallèles entre elles.

Selon une deuxième configuration de l'afficheur, la surface inclinée de la paroi latérale est formée par un tronc de cône qui s'étend sur toute la périphérie de la paroi latérale.

Dans cette deuxième configuration, il est envisageable que la paroi latérale du guide de lumière comporte une pluralité de troncs de cône, le long d'un axe principal d'extension du guide de lumière, lesdits troncs de cône étant concentriques entre eux.

Une autre caractéristique avantageuse de l'afficheur, quelle que soit sa configuration, réside dans le fait que chaque surface inclinée est orientée de manière à former un angle compris entre 30 degrés et 60 degrés par rapport à une section transversale du guide de lumière. Cette inclinaison particulière de la surface inclinée permet d'éliminer efficacement les rayonnements lumineux parasites puisque la transmission du rayonnement lumineux parasite vers l'extérieur du guide de lumière est d'autant plus efficace que ce rayonnement lumineux parasite rencontre ladite surface inclinée avec un angle d'incidence proche de 0 degré.

Une caractéristique avantageuse supplémentaire de l'afficheur, quelle que soit sa configuration, réside dans le fait que la face d'entrée du guide de lumière est inclinée de manière à être tournée vers le fond du boîtier. Cette orientation particulière de la face d'entrée est adaptée pour dévier par réfraction le rayonnement lumineux provenant de la zone d'intérêt, de manière à le coupler dans le guide de lumière en direction de la face de sortie dudit guide d'onde.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe verticale, de côté, d'un afficheur mettant en oeuvre les enseignements de l'invention ;
- la figure 2 est une vue schématique de détail de la zone II de la figure 1 ;
- la figure 3 est une vue schématique globale d'un premier mode de réalisation du guide de lumière de l'afficheur de la figure 1 ; et,
- la figure 4 est une vue schématique en coupe horizontale du guide de lumière de la figure 3 derrière lequel est prévu le capteur de lumière.

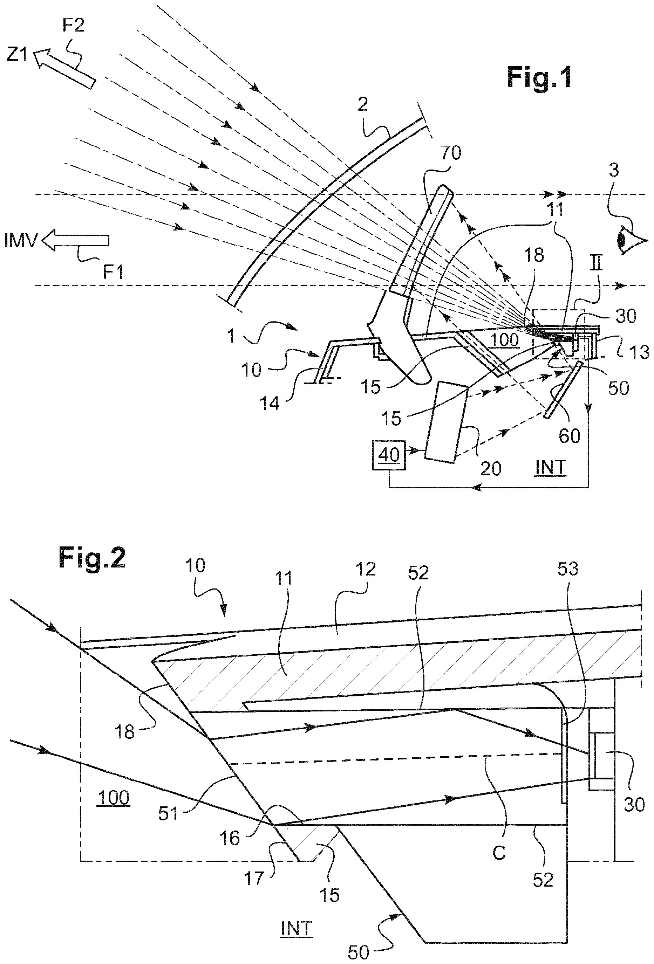

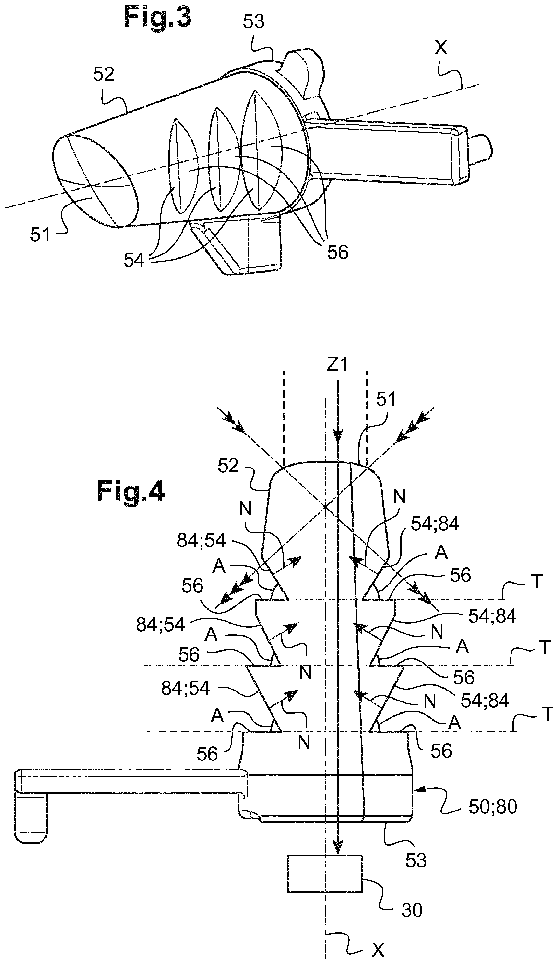

La figure 4 représente aussi une vue schématique en coupe horizontale d'un deuxième mode de réalisation du guide de lumière de l'afficheur de la figure 1.

La figure 1 représente schématiquement les éléments principaux d'un afficheur 1, ici un afficheur tête haute, destiné à équiper un véhicule, par exemple un véhicule automobile, un train, un bateau tel qu'une péniche, un tramway ou un bus.

Dans la suite de la description, on décrira plus particulièrement un afficheur tête haute équipant un véhicule automobile. Par convention, les termes « supérieur » et « inférieur » désigneront alors les éléments décrits en position dans le véhicule automobile, par rapport à la direction verticale dudit véhicule automobile. La partie inférieure d'un élément désignera la partie de cet élément qui est située du côté du plancher du véhicule et la partie supérieure désignera la partie de cet élément qui est située du côté du toit.

L'afficheur 1 comprend plus particulièrement une unité de génération d'image 20, comportant par exemple un dispositif de rétroéclairage éclairant un écran à cristaux liquides (ou LCD pour "Liquid Crystal Display") à transistors en couche mince (ou TFT pour "Thin-Film Transistor").

Ici, l'afficheur 1 comprend également un ensemble optique de projection adapté à projeter une image générée par l'unité de génération d'image 20, en direction d'une lame partiellement transparente 70 pour, avec la lame partiellement transparente, former une image virtuelle IMV dans le champ de vision d'un utilisateur. L'image virtuelle IMV reproduit l'image générée au niveau de l'unité de génération d'image 20.

On peut ainsi afficher des informations dans le champ de vision de l'utilisateur sans que celui-ci n'ait à détourner le regard. En pratique, cet utilisateur est ici le conducteur du véhicule.

Comme le montre la figure 1, l'ensemble optique de projection comprend ici un miroir de repliement 60. En variante, il pourrait comprendre une pluralité de miroirs et/ou d'autres éléments optiques.

La lame partiellement transparente 70 est formée par un combineur, c'est-à-dire une plaque mince, partiellement transparente, disposée ici entre le parebrise 2 du véhicule et les yeux 3 du conducteur.

On peut prévoir en variante que l'ensemble optique de projection projette directement l'image générée par l'unité de génération d'image en direction du parebrise du véhicule, le combineur précité étant alors omis. Dans ce cas, la lame partiellement transparente est formée par le parebrise du véhicule lui-même.

L'expression « lame partiellement transparente » désigne ici une lame présentant un niveau de transparence compris entre celui d'une lame complètement transparente, et celui d'une lame complètement opaque.

En plus d'être partiellement transparente, cette lame est partiellement réfléchissante, et permet ainsi de renvoyer en direction de l'utilisateur une partie au moins de la lumière produite par l'unité de génération d'image 20, comme cela est représenté schématiquement sur la figure 1.

L'image virtuelle IMV, formée dans le champ de vision du conducteur par le miroir de repliement 60 et la lame partiellement transparente 70, est située à l'opposé du conducteur par rapport à la lame partiellement transparente 70, par exemple à quelques mètres devant la lame partiellement transparente 70, les termes « avant » et « arrière » étant définis par rapport à l'avant et l'arrière du véhicule automobile.

Ici, pour le conducteur du véhicule, l'image virtuelle IMV se forme au sein de l'environnement routier faisant face au véhicule. Cette image virtuelle IMV se superpose ainsi visuellement à cet environnement.

La direction dans laquelle est formée l'image virtuelle IMV, c'est-à-dire la direction dans laquelle est située l'image virtuelle IMV par rapport à l'afficheur 1, est repérée schématiquement sur la figure 1 par la flèche F1.

L'afficheur 1 comprend également un boîtier 10 dans lequel sont logés l'unité de génération d'image 20 et le miroir de repliement 60.

Les termes « interne » et « externe » seront définis par rapport à ce boîtier 10. Ainsi, un élément « interne » désigne un élément disposé à l'intérieur du boîtier 10, tandis que le terme « externe » désigne un élément disposé à l'extérieur du boîtier 10.

Le boîtier 10, représenté partiellement sur la figure 1, cache au regard de l'utilisateur les éléments de l'afficheur 1 logés dans le boîtier 10, grâce à quoi l'afficheur 1 présente extérieurement une apparence unifiée et homogène. Le boîtier 10 protège également ces éléments, en particulier les éléments optiques, de corps étrangers tels que des poussières ou de l'eau.

Le boîtier 10 présente une forme globalement parallélépipédique formée par des parois optiquement opaques séparant l'intérieur INT du boîtier 10 de l'extérieur de celui-ci. Le boîtier 10 comporte plus précisément une paroi de fond (non visible sur les figures), à partir de laquelle s'élève une paroi latérale comportant quatre pans 13, 14 deux à deux opposés (voir figure 1). Le boîtier 10 est fermé, à l'opposé de la paroi de fond, par une paroi supérieure 11, située du côté de la lame partiellement transparente 70 en position d'usage.

La paroi supérieure 11 est ici globalement plane. La paroi supérieure 11 est percée d'une ouverture 18 (voir figure 1 et 2) autorisant le miroir de repliement 60 à projeter l'image virtuelle IMV depuis l'intérieur du boîtier 10 en direction de la lame partiellement transparente 70 en position d'usage, c'est-à-dire disposée à l'extérieur du boîtier 10, entre les yeux 3 du conducteur et le parebrise 2 du véhicule.

Comme le montrent les figures 1 et 2, le boîtier 10 comporte ici, au niveau de l'ouverture 18, un renfoncement 100 s'étendant en retrait de la paroi supérieure 11, en direction de la paroi de fond du boîtier 10. Le renfoncement 100 est plus particulièrement délimité par quatre montants 15 du boîtier 10 bordant l'ouverture 18 et s'étendant vers la paroi de fond du boîtier 10. Les montants 15 sont optiquement opaques et évitent qu'un rayonnement lumineux parasite, autre que celui destiné à former l'image virtuelle IMV, ne sorte du boîtier 10 de l'afficheur 1.

En position d'usage, la lame partiellement transparente 70, ici sous forme du combineur, s'étend à l'extérieur du boîtier 10, en saillie par rapport à la paroi supérieure 11. On peut prévoir, de manière optionnelle, que le combineur soit monté mobile par rapport au boîtier 10 entre sa position d'usage et une position rétractée dans laquelle le combineur est logé à l'intérieur du boîtier.

L'afficheur 1 comprend également un capteur 30 de lumière, tel qu'une photodiode ou un phototransistor, adapté à délivrer un signal représentatif d'une intensité lumineuse qu'il reçoit, et disposé de manière à recevoir un rayonnement lumineux provenant de l'extérieur de l'afficheur 1.

L'afficheur 1 est adapté à ce que la luminosité de l'image générée par l'unité de génération d'image 20 soit commandée en fonction du signal délivré par le capteur 30 de lumière.

La luminosité de l'image générée peut ainsi être adaptée à une luminosité ambiante, mesurée au moyen du capteur 30, ce qui permet d'assurer la visibilité de l'image virtuelle IMV, même lorsque la luminosité ambiante varie.

Plus précisément, l'afficheur 1 est adapté ici à ce que la luminosité de l'image générée soit d'autant plus grande que l'intensité lumineuse reçue par ledit capteur 30 est grande.

Pour cela, l'afficheur 1 comprend ici une unité de commande 40, programmée pour commander la luminosité de l'image générée par l'unité de génération d'image 20, en fonction du signal délivré par ce capteur 30. En l'occurrence, l'unité de commande 40 est programmée pour commander la luminosité de l'image générée de sorte qu'elle est d'autant plus grande que l'intensité lumineuse reçue par ledit capteur 30 est grande.

Pour adapter ainsi la luminosité de l'image générée, il est prévu ici de commander l'amplitude moyenne d'un courant électrique, ou d'une tension électrique, d'alimentation du dispositif de rétroéclairage de l'unité de génération d'image 20.

Ici, plus précisément, l'unité de commande 40 est programmée pour moduler la largeur d'impulsions d'un courant électrique d'alimentation du dispositif de rétroéclairage de l'unité de génération d'image 20, de sorte que l'intensité moyenne (au cours du temps) de ce courant électrique est d'autant plus grande que l'intensité lumineuse mesurée par le capteur 30 est grande.

Le lien entre l'intensité lumineuse mesurée par le capteur 30 et l'intensité moyenne correspondante, du courant électrique appliqué au dispositif de rétroéclairage, est par exemple mémorisée sous la forme d'une table de correspondance, dans une mémoire de l'unité de commande 40.

En variante, l'unité de commande peut être omise, la commande de l'unité de génération d'image étant alors réalisée, de manière comparable à ce qui a été décrit ci-dessus, au moyen d'un module électronique extérieur à l'afficheur.

Comme le montrent les figures 1 et 2, le capteur 30 de lumière est lui aussi logé dans le boîtier 10 de l'afficheur 1. Ici, plus précisément, le capteur 30 de lumière est situé à l'intérieur INT du boîtier, au voisinage de la paroi supérieure 11 du boîtier 10, et d'un des montants 15 délimitant le renfoncement 100. La surface sensible du capteur 30 s'étend ici approximativement perpendiculairement à la paroi supérieure 11 du boîtier 10, en étant globalement tournée vers la lame partiellement transparente 70.

Le capteur 30 de lumière est monté fixement sur une plaque-support de circuit imprimé (non représentée). Pour autoriser une plus grande liberté de positionnement du capteur 30 de lumière au sein de l'afficheur, cette plaque-support de circuit imprimé est ici distincte d'une autre plaque-support de circuit imprimée, principale, de l'afficheur, à laquelle elle est connectée par un câble électrique. La plaque-support de circuit imprimée principale de l'afficheur est par exemple utilisée pour monter l'unité de commande 40 et/ou les composants électroniques nécessaires pour générer le courant électrique (ici modulé en largeur d'impulsions) d'alimentation de l'unité de génération d'image 20. Le signal délivré par le capteur 30 de lumière est transmis jusqu'à la plaque-support de circuit imprimée principale au moyen de la connexion électrique mentionnée ci-dessus.

L'afficheur 1 comprend également un guide de lumière 50 situé à l'intérieur INT du boîtier 10 de l'afficheur 1, de manière à relier le capteur 30 à l'extérieur de boîtier 10.

Comme le montrent les figures 3 et 4, le guide de lumière 50 comporte plus précisément une face d'entrée 51 et une face de sortie 53 opposées, reliées entre elles par une paroi latérale 52. Le guide de lumière 50 est conformé pour, d'une part, collecter au niveau de sa face d'entrée 51 un rayonnement lumineux provenant de l'extérieur du boîtier 10 de l'afficheur 1, et, d'autre part, guider ledit rayonnement lumineux jusqu'à sa face de sortie 53, derrière laquelle est positionné le capteur 30 de lumière.

Le guide de lumière 50 est ici distinct, et disjoint de la lame semi-transparente 70. Cela évite que la lumière émise par l'unité de génération d'image 20, et qui traverse la lame semi-transparente 70 ou est réfléchie par celle-ci, n'atteigne le capteur 30 de lumière. Cet arrangement est particulièrement intéressant, car si une partie de la lumière émise par l'unité de génération d'image 20 atteignait le capteur 30 de lumière, cela perturberait la mesure de luminosité ambiante réalisée au moyen de ce capteur 30.

Ce guide de lumière 50 permet avantageusement de déporter le capteur 30 de lumière à l'intérieur INT du boîtier de l'afficheur 1, sans pour autant rendre l'intérieur INT de ce boîtier visible pour le conducteur, ce qui est particulièrement intéressant en termes d'apparence extérieure de l'afficheur 1.

Le guide de lumière 50 assure par ailleurs une collection efficace du rayonnement lumineux provenant de l'extérieur du boîtier 10 de l'afficheur, dont l'intensité lumineuse est mesurée par le capteur 30 de lumière.

Le guide de lumière 50 est notamment conformé ici de sorte que le rayonnement lumineux qu'il est adapté à collecter au niveau de sa face d'entrée 51 provient d'une zone d'intérêt Z1 située approximativement dans la direction dans laquelle est formée l'image virtuelle IMV.

La direction dans laquelle est située la zone d'intérêt Z1, par rapport à l'afficheur 1, est repérée par la flèche F2 sur la figure 1. Cette direction est proche de la direction dans laquelle est formée ladite image virtuelle IMV.

La zone d'intérêt Z1 peut toutefois être légèrement décalée angulairement par rapport à l'image virtuelle IMV, par exemple d'un angle compris entre 0 degré et 45 degrés dans un plan vertical longitudinal du véhicule.

Comme la direction dans laquelle est située la zone d'intérêt Z1 est proche de la direction dans laquelle est formée l'image virtuelle IMV, la zone d'intérêt Z1 est située pour le conducteur, dans le voisinage visuel de l'image virtuelle IMV. Ici par exemple, d'un point de vue visuel, la zone d'intérêt Z1 est située légèrement au-dessus de l'image virtuelle IMV, dans le champ de vision du conducteur (comme cela est illustré schématiquement sur la figure 1).

La lumière provenant de cette zone d'intérêt Z1 est donc perçue par le conducteur lorsqu'il regarde en direction de ladite image virtuelle IMV.

Grâce au guide de lumière 50, une partie au moins du rayonnement lumineux provenant de cette zone d'intérêt Z1 atteint le capteur 30 de lumière. La luminosité de l'image virtuelle IMV est ainsi ajustée en fonction de la luminosité de la zone d'intérêt Z1, qui est située visuellement au voisinage de cette image IMV. Cela garantit une visibilité optimale de l'image virtuelle IMV pour le conducteur.

On peut prévoir également, de manière optionnelle, que la zone d'intérêt Z1 est non seulement située dans une direction proche de celle dans laquelle se forme l'image virtuelle IMV, mais qu'en outre cette zone d'intérêt Z1 environne ladite image virtuelle IMV. Autrement formulé, on peut prévoir que la zone d'intérêt Z1 est située, dans l'environnement faisant face au conducteur, autour de l'image virtuelle IMV.

Pour collecter de manière sélective le rayonnement lumineux provenant de la zone d'intérêt Z1 le guide de lumière 50 est notamment positionné de manière appropriée dans le boîtier 10.

La face d'entrée 51 du guide de lumière 50 est ici située à proximité de l'ouverture 18 ménagée dans la paroi supérieure 11 du boîtier 10.

Plus précisément, comme on peut le voir sur la figure 2, la face d'entrée 51 du guide de lumière 50 est située dans le renfoncement 100, juste en-dessous de la paroi supérieure 11 du boîtier 10.

Une ouverture secondaire 16 est ménagée dans un des montants 15 délimitant le renfoncement 100 du boîtier 10, en particulier dans le montant 15 situé globalement en face de la lame partiellement transparente 70. La face d'entrée 51 du guide de lumière 50 est située au niveau de cette ouverture secondaire 16, de sorte qu'elle affleure la face externe de ce montant 15.

La face d'entrée 51 du guide de lumière 50 est ainsi abritée au moins en partie d'un rayonnement lumineux globalement vertical environnant l'afficheur 1 par la paroi supérieure 11 du boîtier 10.

Pour renforcer encore cet effet, on peut prévoir comme ici que la paroi supérieure 11 située au-dessus de la face d'entrée 51 du guide de lumière 50 s'étend en surplomb de ladite face d'entrée 51 (voir figure 2). Cette paroi supérieure 11 abrite ainsi la face d'entrée 51 en partie du rayonnement lumineux globalement vertical susmentionné.

La face d'entrée 51 du guide de lumière 50 est alors positionnée de manière particulièrement bien adaptée, d'un point de vue optique, pour récolter la lumière provenant d'une direction proche de la direction de formation de l'image virtuelle IMV, tout en étant abritée au mieux d'autres rayonnements lumineux.

Dans cette configuration, la face d'entrée 51 du guide de lumière 50 est alors située, par rapport à la lame partiellement transparente 70, d'un côté opposé à l'image virtuelle IMV.

Le guide de lumière 50 présente ici une forme globalement conique, avec un axe d'extension principal X reliant le centre de la face d'entrée 51 au centre de la face de sortie 53. La face de sortie 53 présente un diamètre supérieur à la face d'entrée 51.

Le guide de lumière 50 est par exemple réalisé par injection dans un moule d'une matière plastique transparente telle que du polycarbonate transparent ou du polyméthacrylate de méthyle (ou PMMA) transparent.

La face d'entrée 51 du guide de lumière 50 présente ici une orientation adaptée pour dévier par réfraction le rayonnement lumineux provenant de la zone d'intérêt Z1, de manière à le coupler dans le guide de lumière 50. Autrement formulé, la face d'entrée 51 du guide de lumière 50 présente ici une orientation adaptée pour modifier par réfraction la direction de propagation moyenne de ce rayonnement lumineux, de manière qu'elle coïncide, dans le guide de lumière 50, avec celle définie par un chemin de propagation C. Le chemin de propagation C est le chemin de propagation moyen suivi par un rayonnement lumineux provenant de la zone d'intérêt Z1 entrant dans le guide de lumière 50 au niveau de la face d'entrée 51 du guide de lumière et ressortant au niveau de la face de sortie 53 du guide de lumière située en face du capteur 30 de lumière. Le chemin de propagation C est ici approximativement rectiligne, parallèle à la paroi supérieure 11 du boîtier 10. Le chemin de propagation C est en d'autres termes confondu avec l'axe d'extension principal X du guide de lumière 50.

Ainsi, l'orientation de la face d'entrée 51 du guide de lumière est ici adaptée à dévier par réfraction le rayonnement lumineux provenant de ladite zone d'intérêt Z1, en direction du capteur 30 de lumière.

Cette déviation par réfraction est obtenue au moyen d'une inclinaison adaptée de la face d'entrée 51, par rapport à la direction dans laquelle est située la zone d'intérêt Z1. Plus précisément, la face d'entrée 51 du guide de lumière 50 est ici inclinée, par rapport à un plan vertical transversal du véhicule automobile, de manière à être tournée vers la paroi de fond du boîtier 10. Le guide de lumière 50 présente ainsi une forme de biseau au niveau de sa face d'entrée 51 (voir figure 2 et 3). La face d'entrée 51 est notamment orientée de manière oblique par rapport à la direction définie par le chemin de propagation C (au niveau de la face d'entrée 51 du guide de lumière). En d'autres termes encore, la normale au plan moyen de la face d'entrée 51 du guide de lumière 50 forme un angle non nul avec le chemin de propagation C.

Le plan moyen de la face d'entrée 51 forme alors avec la surface supérieure 11 du boîtier 10 qui la surplombe, un angle aigu inférieur à 90 degrés.

Dans une variante non représentée, on peut prévoir que la face d'entrée du guide de lumière est approximativement perpendiculaire à la direction dans laquelle est située la zone d'intérêt vue de la face d'entrée, au lieu d'être orientée de manière oblique par rapport à cette direction comme dans les modes de réalisation décrits ci-dessus. Selon cette variante, lors de son entrée dans le guide de lumière, la lumière provenant de la zone d'intérêt ne serait alors, en moyenne, pas déviée. Dans le cadre de cette variante, le chemin de propagation s'étend alors, à partir de la face d'entrée du guide de lumière, dans une direction sensiblement parallèle à celle dans laquelle est située la zone d'intérêt vue de la face d'entrée du guide de lumière.

On peut prévoir aussi que la face d'entrée 51 du guide de lumière 50 est bombée, pour augmenter l'efficacité et la sélectivité de collection du guide de lumière 50. La face d'entrée 51 peut en particulier être convexe.

Ici, la face d'entrée 51 est formée par un dioptre courbé, c'est-à-dire un dioptre dont au moins une des faces présente un rayon de courbure non nul. De préférence, le dioptre formant la face d'entrée 51 du guide de lumière 50 est bombée vers l'extérieur du guide de lumière 50. Pour renforcer la collecte des rayonnements lumineux entrant dans le guide de lumière 50, en direction du capteur 30 de lumière, le capteur 30 est avantageusement disposé derrière la face de sortie 53 du guide de lumière 50.

La face de sortie 53 du guide de lumière 50 est approximativement plane et orthogonale au chemin de propagation C et à la paroi supérieure 11 du boîtier 10. La face de sortie 53 du guide de lumière 50 est ici disjointe du capteur 30 de lumière, un mince intervalle étant prévu entre le capteur 30 et la face de sortie 53. Cet arrangement disjoint entre le guide de lumière 50 et le capteur 30 empêche avantageusement la transmission de vibrations ou de contraintes mécaniques entre le guide de lumière 50 et le capteur 30.

La paroi latérale 52 du guide de lumière 50, reliant la face d'entrée 51 à la face de sortie 53, remplit une fonction de guidage, depuis la face d'entrée 51 vers la face de sortie 53, des rayonnements lumineux provenant de la zone d'intérêt Z1. Notamment, la paroi latérale 52 guide jusqu'au capteur 30 les rayonnements lumineux formant un angle faible avec l'axe principal d'extension X du guide de lumière 50, c'est-à-dire un angle inférieur à un angle limite, en particulier dans un plan horizontal. L'angle limite est prédéterminé en fonction de la taille angulaire de la zone d'intérêt Z1. L'angle limite est par exemple choisi égal à 30 degrés +/- 15°, en particulier dans un plan horizontal. Cette fonction de guidage est assurée par réflexion interne des rayonnements lumineux provenant de la zone d'intérêt Z1, et collectés au niveau de la face d'entrée 51. A cette fin, la face interne de la paroi latérale 52 est polie. Les faces d'entrée 51 et de sortie 53 du guide de lumière 50 sont également polies.

Le guide de lumière 50 empêche par ailleurs la lumière provenant de régions de l'environnement extérieur autres que la zone d'intérêt Z1 de parvenir jusqu'au capteur 30 de lumière.

Pour ce faire, de manière remarquable, la paroi latérale 52 du guide de lumière 50 de l'afficheur 1 est conformée pour qu'au moins un rayonnement lumineux parasite entrant dans le guide de lumière depuis une zone angulaire s'étendant au-delà de la zone d'intérêt Z1 ressorte dudit guide de lumière 50 sans atteindre la face de sortie 53 de ce guide de lumière 50. Autrement dit, la paroi latérale 52 est conformée pour éliminer du guide de lumière 50 au moins un rayonnement lumineux parasite entrant dans le guide de lumière depuis une zone angulaire s'étendant au-delà de la zone d'intérêt Z1.

En d'autres termes encore, la paroi latérale 52 est prévue pour empêcher qu'un rayonnement lumineux formant, avec l'axe principal d'extension X du guide de lumière, un angle supérieur audit angle limite prédéterminé n'atteigne la face de sortie 53 du guide de lumière 50.

Par exemple, la paroi latérale 52 du guide de lumière 50 est adaptée à éliminer les rayonnements lumineux parasites provenant d'une zone angulaire comprise entre 30° et 90°, dans un plan horizontal, de part et d'autre de l'image virtuelle IMV, par rapport à la l'axe principal d'extension X du guide de lumière.

La paroi latérale 52 comporte de manière avantageuse au moins une surface inclinée 54 ; 84 avec laquelle interagit le rayonnement lumineux parasite, de sorte que ce rayonnement lumineux ressort du guide de lumière sans atteindre la face de sortie 53 dudit guide de lumière. Plus précisément, le rayonnement lumineux parasite ressort du guide de lumière 50 par transmission au niveau de la surface inclinée 54 ; 84.

La surface inclinée 54 ; 84 empêche de cette manière la réflexion de ce rayonnement lumineux parasite au sein du guide de lumière 50, en direction de la face de sortie 53 du guide de lumière. Ainsi, ce rayonnement lumineux parasite n'atteint jamais le capteur 30.

En pratique, comme le montrent les figures 3 et 4, la surface inclinée est ici formée par une facette 54 plane. Elle est orientée en direction de la face d'entrée 51 du guide de lumière 50 (voir figure 4). De manière avantageuse, la facette 54 est orientée pour former un angle A compris entre 30 degrés et 60 degrés avec le plan formé par une section transversale T du guide de lumière 50. La paroi latérale 52 du guide de lumière 50 comporte aussi une facette transversale 56, qui s'étend perpendiculairement à l'axe principal d'extension X du guide de lumière 50 et qui relient la facette 54 au reste de la paroi latérale 52.

L'inclinaison particulière de la facette 54 permet d'éliminer efficacement les rayonnements lumineux parasites puisque la transmission du rayonnement lumineux parasite vers l'extérieur du guide de lumière 50 est d'autant plus efficace que le rayonnement lumineux parasite rencontre ladite facette 54 avec un angle d'incidence proche de 0 degré, c'est-à-dire quasi-parallèle à la normale N de ladite facette 54. On considère ici que la transmission est efficace lorsque le rayonnement lumineux parasite rencontre la facette 54 avec un angle d'incidence compris entre 0 degré et 30 degré avec sa normale N.

L'orientation de la facette transversale 56, perpendiculaire à l'axe d'extension principal X du guide de lumière 50, évite quant à elle que le rayonnement parasite, éliminé par transmission au niveau de la facette 54 et éventuellement légèrement dévié par cette facette 54, ne puisse rentrer à nouveau dans le guide de lumière 50.

Ici, comme le montrent les figures 3 et 4, la paroi latérale 52 du guide de lumière 50 comporte plus précisément une pluralité de facettes 54 le long d'un axe principal d'extension X du guide de lumière 50, deux facettes 54 adjacentes le long dudit axe principal d'extension X étant quasiment parallèles entre elles. Deux facettes 54 adjacentes peuvent notamment être parallèles, c'est-à-dire que leur normales N respectives sont alors parallèles entre elles. Cela permet d'éliminer plus efficacement les rayonnements lumineux parasites susceptibles de rencontrer la paroi latérale 52 du guide de lumière 50 à différents endroits.

En outre, la paroi latérale 52 du guide de lumière 50 est globalement symétrique par rapport à un plan vertical s'étendant entre la face d'entrée 51 et la face de sortie 53 du guide de lumière 50, et passant par l'axe principal d'extension X dudit guide de lumière 50. Autrement dit, les facettes 54 sont symétriques de part et d'autre de l'axe principal d'extension X du guide de lumière 50. La paroi latérale 52 est ainsi adaptée à éliminer efficacement les rayonnements lumineux parasites provenant de chaque côté de la zone d'intérêt Z1.

La paroi latérale 52 du guide de lumière 50 comporte donc ici une pluralité de facettes 54, disposées de part et d'autre de l'axe d'extension principal X du guide de lumière 50, au niveau d'une pluralité de sections transversales dudit guide de lumière 50 (voir figure 4).

La paroi latérale 52 du guide de lumière 50 comporte en particulier six facettes 54, trois facettes 54 disposées d'un côté de l'axe d'extension principal X, et trois autres facettes 54 situées de l'autre côté.

Selon une autre configuration de l'afficheur 1, un deuxième mode de réalisation du guide de lumière 80 peut être utilisé, dont seule les différences seront décrites par rapport au premier mode de réalisation du guide de lumière 50 précédemment décrit. Le deuxième mode de réalisation du guide de lumière 80 est représenté en coupe horizontale sur la figure 4. Selon ce deuxième mode de réalisation du guide de lumière 80, il est prévu que la surface inclinée de la paroi latérale 52 du guide de lumière 80, qui permet d'éliminer les rayonnements lumineux parasites entrant par la face d'entrée 51 de ce guide de lumière 80, soit formée par un tronc de cône 84 qui s'étend sur toute la périphérie du guide de lumière 80, dans une section transversale T du guide de lumière 80. Ce tronc de cône 84 permet avantageusement d'éliminer les rayonnements lumineux parasites provenant de tout autour de la zone d'intérêt Z1.

Ce tronc de cône 84 est par exemple formé en entaillant, depuis l'extérieur, la paroi latérale 52 du guide de lumière 80 à l'aide d'une pointe biseautée, et en faisant tourner le guide de lumière 80 autour de son axe principal d'extension X.

Ce tronc de cône 84 est tel que le sommet du cône tronqué est dirigé vers la face de sortie 53 du guide de lumière 80.

Le tronc de cône 84 est orienté de manière à former un angle A compris entre 30 degrés et 60 degrés par rapport à la section transversale T du guide de lumière 80 au niveau de laquelle il est formé. Ainsi, en particulier dans une coupe horizontale du guide de lumière 80 (voir figure 4), le tronc de cône 84, forme l'angle A compris 30 degrés et 60 degrés avec la section transversale T du guide de lumière 80 au niveau de laquelle il est formé.

L'inclinaison particulière du tronc de cône 84 permet d'éliminer efficacement les rayonnements lumineux parasites puisque la transmission du rayonnement lumineux parasite vers l'extérieur du guide de lumière 80 est d'autant plus efficace que le rayonnement lumineux parasite rencontre la surface du tronc de cône 84 avec un angle d'incidence proche de 0 degré.

De même que dans la configuration du guide de lumière 50 « à facettes 54 planes », il est possible de munir le guide de lumière 80 « à cône tronqué 84 » d'une pluralité de cônes tronqués 84, qui sont prévus le long de l'axe principal d'extension X du guide de lumière 50. Ces cônes tronqués 84 présentent alors tous le même angle A avec la section transversale T du guide de lumière 50 au niveau de laquelle ils sont respectivement formés, de manière à former des cônes tronqués concentriques.

Le reste du deuxième mode de réalisation du guide de lumière 80 est en tout point identique au premier mode de réalisation du guide de lumière 50.

## Revendications

1. Afficheur (1) comprenant :
- un boîtier (10),
- un guide de lumière (50 ; 80) situé à l'intérieur du boîtier (10) de l'afficheur (1), comportant une face d'entrée (51) et une face de sortie (53) opposées, reliées entre elles par une paroi latérale (52), ledit guide de lumière (50 ; 80) étant conformé pour, d'une part, collecter au niveau de sa face d'entrée (51) un rayonnement lumineux provenant de l'extérieur du boîtier (10) de l'afficheur, et, d'autre part, guider ledit rayonnement lumineux jusqu'à sa face de sortie (53),
- un capteur (30) de lumière, disposé à l'intérieur dudit boîtier (10), derrière la face de sortie (53) du guide de lumière (50 ; 80), adapté à délivrer un signal représentatif d'une intensité lumineuse qu'il reçoit,
- une unité de génération d'image (20) adaptée à générer au moins une image, et
- un ensemble optique de projection (60) adapté à transmettre l'image générée par l'unité de génération d'image (20) en direction d'une lame partiellement transparente (70), distincte dudit guide de lumière (50), de manière à former une image virtuelle (IMV) dans le champ de vision d'un utilisateur et dans lequel une zone d'intérêt (Z1) est située approximativement dans la direction dans laquelle est formée ladite image virtuelle (IMV)
**caractérisé en ce que** la paroi latérale (52) du guide de lumière (50 ; 80) de l'afficheur (1) est conformée pour qu'au moins un rayonnement lumineux parasite entrant dans le guide de lumière (50 ; 80) depuis une zone angulaire s'étendant au-delà de la zone d'intérêt (Z1) ressorte dudit guide de lumière (50 ; 80) sans atteindre la face de sortie (53) du guide de lumière (50 ; 80).

2. Afficheur (1) selon la revendication 1, dans lequel la luminosité de la l'image générée par l'unité de génération d'image (20) est commandée en fonction du signal délivré par le capteur (30) de lumière.

3. Afficheur (1) selon l'une des revendications 1 à 2, dans lequel la paroi latérale (52) du guide de lumière (50 ; 80) comporte au moins une surface inclinée (54 ; 84) à travers laquelle est transmis le rayonnement lumineux parasite jusqu'à l'extérieur du guide de lumière (50).

4. Afficheur (1) selon la revendication 3, dans lequel la surface inclinée (54 ; 84) est orientée en direction de la face d'entrée (51) du guide de lumière (50 ; 80).

5. Afficheur (1) selon l'une des revendications 53 et 4, dans lequel la paroi latérale (52) du guide de lumière (50 ; 80) est globalement symétrique par rapport à un plan vertical s'étendant entre la face d'entrée (51) et la face de sortie (53) du guide de lumière (50 ; 80).

6. Afficheur (1) selon l'une des revendications 1 à 5, dans lequel le guide de lumière (50 ; 80) est globalement conique.

7. Afficheur (1) selon l'une des revendications 3 à 6, dans lequel la surface inclinée est formée par une facette (54) plane.

8. Afficheur (1) selon la revendication 7, dans lequel la paroi latérale (52) du guide de lumière (50) comporte une pluralité de facettes (54) le long d'un axe principal d'extension (X) du guide de lumière (50), deux facettes (54) adjacentes le long dudit axe principal d'extension (X) étant au moins quasiment parallèles entre elles.

9. Afficheur (1) selon l'une des revendications 3 à 6, dans lequel la surface inclinée est formée par un tronc de cône (84) qui s'étend sur toute la périphérie du guide de lumière (50).

10. Afficheur (1) selon la revendication 9, dans lequel la paroi latérale (52) du guide de lumière (80) comporte une pluralité de troncs de cône (84), le long d'un axe principal d'extension (X) du guide de lumière (80), lesdits troncs de cône (84) étant concentriques entre eux.

11. Afficheur (1) selon l'une des revendications 53 à 10, dans lequel chaque surface inclinée (54 ; 84) est orientée de manière à former un angle (A) compris entre 30 degrés et 60 degrés par rapport à une section transversale (T) du guide de lumière (50 ; 80).

12. Afficheur (1) selon l'une des revendications 1 à 11, dans lequel la face d'entrée (51) du guide de lumière (50 ; 80) est formée par un dioptre courbé.

## Patentansprüche

1. Anzeige (1), umfassend:
- ein Gehäuse (10),
- einen Lichtleiter (50; 80), der im Inneren des Gehäuses (10) der Anzeige (1) gelegen ist und der eine Eintrittsseite (51) und eine Austrittsseite (53) aufweist, die entgegengesetzt sind und untereinander durch eine Seitenwand (52) verbunden sind, wobei der Lichtleiter (50; 80) dazu ausgebildet ist, einerseits an seiner Eintrittsseite (51) eine von außerhalb des Gehäuses (10) der Anzeige kommende Lichtstrahlung zu sammeln und andererseits die Lichtstrahlung bis zu seiner Austrittsseite (53) zu leiten,
- einen Lichtsensor (30), der im Inneren des Gehäuses (10), hinter der Austrittsseite (53) des Lichtleiters, (50; 80) angeordnet ist und geeignet ist, ein Signal auszugeben, das für eine von ihm empfangene Lichtstärke repräsentativ ist,
- eine Bilderzeugungseinheit (20), die geeignet ist, mindestens ein Bild zu erzeugen, und
- eine optische Projektionsanordnung (60), die geeignet ist, das von der Bilderzeugungseinheit (20) erzeugte Bild in Richtung einer teilweise transparenten Platte (70) zu übertragen, die von dem Lichtleiter (50) verschieden ist, so dass ein virtuelles Bild (IMV) im Sichtfeld eines Benutzers gebildet wird, und bei der ein Bereich von Interesse (Z1) annähernd in der Richtung gelegen ist, in der das virtuelle Bild (IMV) gebildet wird
**dadurch gekennzeichnet, dass** die Seitenwand (52) des Lichtleiters (50; 80) der Anzeige (1) dazu ausgebildet ist, dass mindestens eine Störlichtstrahlung, die in den Lichtleiter (50; 80) von einem Winkelbereich aus eintritt, der sich jenseits des Bereichs von Interesse (Z1) erstreckt, aus dem Lichtleiter (50; 80) wieder austritt, ohne die Austrittsseite (53) des Lichtleiters (50; 80) zu erreichen.

2. Anzeige (1) nach Anspruch 1, bei der die Helligkeit des von der Bilderzeugungseinheit (20) erzeugten Bildes in Abhängigkeit von dem von dem Lichtsensor (30) ausgegebenen Signal gesteuert wird.

3. Anzeige (1) nach einem der Ansprüche 1 bis 2, bei der die Seitenwand (52) des Lichtleiters (50; 80) mindestens eine geneigte Fläche (54; 84) aufweist, durch die hindurch die Störlichtstrahlung bis nach außerhalb des Lichtleiters (50) übertragen wird.

4. Anzeige (1) nach Anspruch 3, bei der die geneigte Fläche (54; 84) in Richtung der Eintrittsseite (51) des Lichtleiters (50; 80) ausgerichtet ist.

5. Anzeige (1) nach einem der Ansprüche 53 und 4, bei der die Seitenwand (52) des Lichtleiters (50; 80) im Wesentlichen symmetrisch in Bezug auf eine vertikale Ebene ist, die sich zwischen der Eintrittsseite (51) und der Austrittsseite (53) des Lichtleiters (50; 80) erstreckt.

6. Anzeige (1) nach einem der Ansprüche 1 bis 5, bei welcher der Lichtleiter (50; 80) im Wesentlichen konisch ist.

7. Anzeige (1) nach einem der Ansprüche 3 bis 6, bei der die geneigte Fläche durch eine plane Facette (54) gebildet wird.

8. Anzeige (1) nach Anspruch 7, bei der die Seitenwand (52) des Lichtleiters (50) eine Mehrzahl von Facetten (54) entlang einer Haupterstreckungsachse (X) des Lichtleiters (50) aufweist, wobei zwei benachbarte Facetten (54) entlang der Haupterstreckungsachse (X) zumindest nahezu parallel zueinander sind.

9. Anzeige (1) nach einem der Ansprüche 3 bis 6, bei der die geneigte Fläche durch einen Kegelstumpf (84) gebildet wird, der sich über den gesamten Umfang des Lichtleiters (50) erstreckt.

10. Anzeige (1) nach Anspruch 9, bei der die Seitenwand (52) des Lichtleiters (80) eine Mehrzahl von Kegelstümpfen (84) entlang einer Haupterstreckungsachse (X) des Lichtleiters (80) aufweist, wobei die Kegelstümpfe (84) konzentrisch zueinander sind.

11. Anzeige (1) nach einem der Ansprüche 53 bis 10, bei der jede geneigte Fläche (54; 84) so ausgerichtet ist, dass ein Winkel (A) zwischen 30 Grad und 60 Grad in Bezug auf einen Querschnitt (T) des Lichtleiters (50; 80) gebildet wird.

12. Anzeige (1) nach einem der Ansprüche 1 bis 11, bei der die Eintrittsseite (51) des Lichtleiters (50; 80) durch einen gekrümmten Diopter gebildet wird.

## Claims

1. Display (1) comprising:
- a housing (10),
- a light guide (50; 80) located inside the housing (10) of the display (1), comprising an entrance face (51) and an exit face (53) opposite one another, connected to one another by a lateral wall (52), said light guide (50; 80) being shaped so as, on the one hand, to collect, via its entrance face (51), light radiation from outside the housing (10) of the display, and, on the other hand, to guide said light radiation to its exit face (53),
- a light sensor (30), arranged inside said housing (10), behind the exit face (53) of the light guide (50; 80), suitable for delivering a signal representative of a light intensity that it receives,
- an image generation unit (20) suitable for generating at least one image, and
- an optical projection assembly (60) suitable for transmitting the image generated by the image generation unit (20) in the direction of a partially transparent plate (70), distinct from said light guide (50), so as to form a virtual image (IMV) in the field of view of a user and wherein a zone of interest (Z1) is located approximately in the direction in which said virtual image (IMV) is formed,
**characterized in that** the lateral wall (52) of the light guide (50; 80) of the display (1) is shaped so that at least some stray light radiation entering the light guide (50; 80) from an angular zone extending beyond the zone of interest (21) exits said light guide (50; 80) without reaching the exit face (53) of the light guide (50; 80).

2. Display (1) according to Claim 1, wherein the brightness of the image generated by the image generation unit (20) is controlled according to the signal delivered by the light sensor (30) .

3. Display (1) according to one of Claims 1 and 2, wherein the lateral wall (52) of the light guide (50; 80) comprises at least one inclined surface (54; 84) through which the stray light radiation is transmitted out of the light guide (50).

4. Display (1) according to Claim 3, wherein the inclined surface (54; 84) is oriented in the direction of the entrance face (51) of the light guide (50; 80).

5. Display (1) according to one of Claims 53 and 4, wherein the lateral wall (52) of the light guide (50; 80) is overall symmetrical with respect to a vertical plane extending between the entrance face (51) and the exit face (53) of the light guide (50; 80).

6. Display (1) according to one of Claims 1 to 5, wherein the light guide (50; 80) is overall conical.

7. Display (1) according to one of Claims 3 to 6, wherein the inclined surface is formed by a planar facet (54) .

8. Display (1) according to Claim 7, wherein the lateral wall (52) of the light guide (50) comprises a plurality of facets (54) along a main axis of extension (X) of the light guide (50), two adjacent facets (54) along said main axis of extension (X) being at least substantially parallel to one another.

9. Display (1) according to one of Claims 3 to 6, wherein the inclined surface is formed by a truncated cone (84) that extends around the entire periphery of the light guide (50).

10. Display (1) according to Claim 9, wherein the lateral wall (52) of the light guide (80) comprises a plurality of truncated cones (84), along a main axis of extension (X) of the light guide (80), said truncated cones (84) being concentric with one another.

11. Display (1) according to one of Claims 53 to 10, wherein each inclined surface (54; 84) is oriented so as to form an angle (A) of between 30 degrees and 60 degrees with respect to a cross section (T) of the light guide (50; 80).

12. Display (1) according to one of Claims 1 to 11, wherein the entrance face (51) of the light guide (50; 80) is formed by a curved dioptre.
